Europäisches Patentamt

European Patent Office

Office européen des brevets

(11) Veröffentlichungsnummer: **0 504 438 A1**

(12) **EUROPÄISCHE PATENTANMELDUNG**

(21) Anmeldenummer: **91104108.5**

(22) Anmeldetag: **16.03.91**

(51) Int. Cl.⁵: **G01B 5/255**

(43) Veröffentlichungstag der Anmeldung:
**23.09.92 Patentblatt 92/39**

(84) Benannte Vertragsstaaten:
**AT BE CH DE DK ES FR GB GR IT LI LU NL SE**

(71) Anmelder: **CARL SCHENCK AG**
**Landwehrstrasse 55 Postfach 40 18**
**W-6100 Darmstadt(DE)**

(72) Erfinder: **Storck, Karlheinz, Dr.**
**Waldstrasse 84**
**W-6109 Mühltal 2(DE)**

(74) Vertreter: **Brandt, Ernst-Ulrich**
**Fa. Carl Schenck AG Patentabteilung**
**Landwehrstrasse 55 Postfach 40 18**
**W-6100 Darmstadt 1(DE)**

(54) Fahrzeugprüfstand.

(57) Die Erfindung bezieht sich auf einen Fahrzeug-prüfstand insbesondere zum Vermessen der Radachsgeometrie, mit mindestens einem in einem Rahmen (27) gelagerten, ein Fahrzeugrad aufnehmenden Rollenpaar (26), dessen Rollenlängsachsen (A) im wesentlichen horizontal verlaufen, wobei der Rahmen (27) zum Ausgleich von Fahrwerksverspannungen in einer im wesentlichen horizontalen Ebene verschiebbar und drehbar gelagert ist. Um eine Fahrzeuglagerung zu erhalten, welche möglichst ge-ringe Rückwirkungen auf das Fahrwerk besitzt, ist vorgesehen, daß der Momentanpol der Rahmenbewegung gegenüber einer festen Ebene in Richtung der Ausgleichsbewegung des Rades quer zum Fahr-zeug verschiebbar ist.

Fig. 3

EP 0 504 438 A1

Die Erfindung betrifft einen Fahrzeugprüfstand, insbesondere zum Vermessen der Radachsgeometrie, mit mindestens einem in einem Rahmen gelagerten, ein Fahrzeugrad aufnehmenden Rollenpaar, dessen Rollenlängsachsen im wesentlichen horizontal verlaufen, wobei der Rahmen zum Ausgleich von Fahrwerksverspannungen in einer im wesentlichen horizontalen Ebene verschiebbar und drehbar gelagert ist.

Eine derartige Prüfeinrichtung ist aus der EP 0 109 913 A2 bekannt. Die bekannte Einrichtung weist einen Rahmen auf, dessen Schwenkachse zwar parallel zur Fahrzeuglängsachse verschiebbar gelagert, jedoch in Fahrzeugquerrichtung festgelegt ist. Dadurch verändert sich während der Schwenkbewegung der Abstand zwischen der Kraftangriffsachse und dem Momentanpol, d. h. der Drehachse. Dies wiederum hat Störmomente zur Folge, welche die stabilisierenden Rückstelleigenschaften in Abhängigkeit vom Lenkwinkel des Rades verändern. Ein bedeutender Nachteil der bekannten Einrichtung liegt auch darin, daß sich der Rahmen aufgrund seiner Lagerung nicht exakt dem Lenkwinkel bzw. dem Vorspurwinkel des Rades anpassen kann, wodurch aufgrund des sogenannten "Wickeleffektes", welcher bei drehendem Rad zwischen den Rollen und dem Rad auftritt, wenn eine Winkelabweichung zwischen den Rollen und dem Rad vorliegt, Axialkräfte auf die Rollen wirksam werden. Diese Kräfte wiederum führen zu Fahwerksverspannungen, wodurch die Qualität der Fahrwerksvermessungen stark beeinträchtigt wird.

Der Erfindung liegt daher die Aufgabe zugrunde, einen gattungsgemäßen Fahrzeugprüfstand zu schaffen, bei welchem die beschriebenen Nachteile nicht auftreten. Insbesondere soll erreicht werden, daß eine aus dem "Wickeleffekt" resultierende Radauswanderung in Verbindung mit dem Lenkmoment, welches aus der Winkelabweichung zwischen den Rollen und dem Rad entsteht, ein Angleichen zwischen Rollenanstellwinkel und Radlenkwinkel bewirken. Durch die Erfindung soll eine Fahrzeuglagerung geschaffen werden, die selbst bei merklichen Lenkwinkeln ein Verspannen des Fahrwerkes verhindert.

Diese Aufgabe wird erfindungsgemäß dadurch gelöst, daß der Momentanpol der Rahmenbewegung gegenüber einer festen Ebene in Richtung der Ausgleichsbewegung des Rades quer zum Fahrzeug verschiebbar ist. Im Idealfall ist die Verschiebung des Momentanpols und der Ausgleichsweg des Rades gleich groß. In diesem Fall liegt die Radialebene der Rollen stets parallel zur Radialebene des Rades. Die Störgrößen sind in diesem Fall völlig eliminiert.

Eine bevorzugte Ausführungsform der Erfindung sieht vor, daß der Rahmen einen gekrümmten Abwälzbereich aufweist, mittels dessen er sich im Zwanglauf auf einer Führungsfläche abwälzt. Durch entsprechende Ausbildung des Abwälzbereiches kann der Prüfstand dann auf die Fahrwerksgeometrie des zu prüfenden Fahrzeuges abgestimmt werden. Die aufeinander abwälzenden Flächen können beispielsweise als auswechselbare Teile ausgeführt werden.

Eine Anpassung der Längsverschiebung des Rades, welche von der Fahrwerksgeometrie abhängt, läßt sich in einfacher Weise dadurch erreichen, daß die Führungsfläche schwenkbar angelenkt ist. Eine zwangsläufige Abwälzbewegung läßt sich besonders einfach dadurch realisieren, daß die Führungsfläche und der Abwälzbereich über eine Verzahnung miteinander in Eingriff stehen. Eine zweite, ebenfalls mit geringem Aufwand zu fertigende Möglichkeit sieht vor, daß der Abwälzbereich über einen, ihn zumindest teilweise umschlingenden Bandtrieb mit der Führungsfläche in Verbindung steht.

Eine besonders kostengünstig realisierbare Ausführung sieht vor, daß die Führungsfläche als Zahnstange ausgeführt ist.

Wird die Zahnstange entlang ihrer Längsachse verschiebbar gelagert, so läßt sich eine völlige Entkopplung des Rahmens erreichen. Diese Entkopplung läßt sich bei Bedarf aufheben, wenn eine Haltevorrichtung vorgesehen ist, durch welche die Längsverschiebbarkeit der Zahnstange unterbindbar ist.

Zur Prüfstandanpassung an die meisten Fahrwerksgeometrien ist es ausreichend, wenn der Abwälzbereich kreisförmig ausgebildet ist; dies führt zu einer einfachen Fertigung der Rahmenlagerung. Um einen möglichst großen Bereich der Fahrwerksparameter auf einem Prüfstand messen zu können, ist es von Vorteil, wenn die Führungsfläche in Längsrichtung des Fahrzeuges begrenzt verschiebbar ist; eine weitere Maßnahme, einen möglichst großen Einsatzbereich zu erreichen, ist dadurch charakterisiert, daß der Rahmen einschließlich seiner Lagerung auf einem längs- und/oder quereinstellbaren Zwischenteil angeordnet ist.

Weitere vorteilhafte Merkmale sowie Funktion der Erfindung ergeben sich aus der nachstehenden Beschreibung anhand der Zeichnung. Hierzu zeigt

Fig. 1    eine erste Ausführungsform der Erfindung,

Fig. 2    eine alternative Ausführungsform für den Zwanglauf und

Fig. 3    eine dritte Variante.

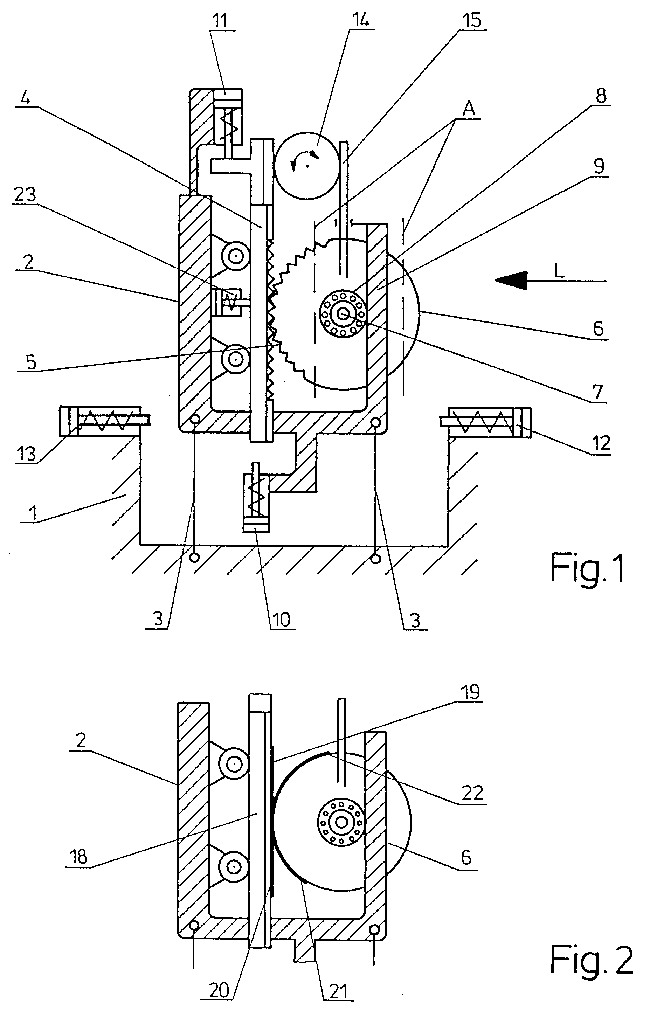

Fig. 1 zeigt die Draufsicht auf die Lagerung eines Laufrollenrahmens, der ein Laufrollenpaar trägt, welches der Aufnahme eines Fahrzeugrades dient. Der Laufrollenrahmen selbst ist der Übersichtlichkeit halber nicht dargestellt; die Drehachsen der Laufrollen sind durch die gestrichelten Linien A angedeutet, die Längsrichtung des zu prüfenden Fahrzeuges und damit die Laufrichtung geradeaus gestellter Räder ist durch den Pfeil L bezeichnet. Der Prüfstand weist einen Basisschemel 1 auf, welcher zur Grundeinstellung längs- und/oder quereinstellbar sein kann. Der Basisschemel 1 ist über zwei jeweils gelenkig gelagerte Lenker 3 mit dem Trägerteil 2 verbunden, wodurch eine Ausgleichbewegung der Laufrollen in Fahrzeuglängsrichtung ermöglicht wird. Das Trägerteil 2 nimmt eine Zahnstange 4 auf, welche in Eingriff mit dem Ritzelsegment 5 steht, welches am Umfang einer horizontal liegenden Scheibe 6 ausgebildet ist, die mit dem nicht dargestellten Rollenrahmen starr verbunden ist.

Der Zapfen 7 trägt eine Laufrolle 8, deren Außenring an einem in Verschiebungsrichtung verlaufenden Abschnitt 9 des Trägerteils 2 anliegt. Durch diese Anordnung können durch das Fahrzeugrad eingeleitete Kraftkomponenten, welche in Fahrzeuglängsrichtung liegen, auf das Trägerteil übertragen werden. In Verschiebungsrichtung verläuft auch die Zahnstange 4, die entlang ihrer Längsachse verschieblich, aber in Querrichtung geführt im Trägerteil 2 gelagert ist. Die Zahnstange 4 kann durch die beiden pneumatisch betätigbaren Arretierzylinder 10, 11 in eine Ausgangslage zurückgesetzt werden. Zum Verhindern einer Relativbewegung zwischen dem Basisschemel 1 und dem Trägerteil 2 bzw. zur Rückführung des Trägerteils in eine Ausgangslage sind zwei weitere Arretierzylinder 12, 13 am Basisschemel 1 befestigt, deren Hubrichtung parallel zur Fahrzeuglängsachse verläuft und durch die das Trägerteil 2 an zwei gegenüberliegenden Stellen beaufschlagbar ist.

Zum Blockieren der Zahnstange 4 ist eine Klemmvorrichtung vorgesehen, die als in Freigaberichtung vorgespannte Zylindereinheit 23 ausgebildet ist. Diese ist am Trägerteil 2 befestigt und beaufschlagt bei Aktivierung die Zahnstange 4 mit einem an ihrem Kolben ausgebildeten Stößel.

Zur Erfassung von Lenkwinkeln ist eine Meßvorrichtung vorgesehen, deren Aufnehmer 14 als Kreisscheibe ausgebildet ist, welche über eine Feinverzahnung zum einen mit dem Endabschnitt der Zahnstange 4 formschlüssig in Eingriff steht und zum anderen durch eine feinverzahnte Stange 15 beaufschlagt ist, welche drehbar um den Zapfen 7 gelagert ist; auf diese Weise wird die Relativbewegung zwischen der feinverzahnten Stange 15 und der Zahnstange 4 aufgenommen.

Ein Fahrzeugprüfstand setzt sich aus mindestens zwei, in der Regel aus vier Rollenpaaren zusammen, die wie oben beschrieben gelagert sind. Die Grundabstimmung des Prüfstandes auf das zu prüfende Fahrzeug erfolgt durch Positionieren der Basisschemel entsprechend der maßgeblichen Spurweite und des Radstandes. Vor dem Auffahren des Fahrzeuges auf die Rollenpaare wird das Trägerteil 2 und die Zahnstange 4 durch Betätigen der Arretierzylinder 10, 11, 12, 13 fixiert. Anschließend wird die Druckbeaufschlagung der Arretierzylinder 12 und 13 aufgehoben, so daß das Trägerteil 2 nicht mehr blockiert ist. Durch den Rollenantrieb werden nun die Fahrzeugräder in Drehung versetzt. Die Fahrzeuglenkung befindet sich dabei in Geradeausstellung. Dabei enstehen aufgrund des durch die Abweichung von Rollenanstellwinkel und Radlenk- bzw. Vorspurwinkel bedingten "Wickeleffekts" Kraftkomponenten, welche die Rollen in axialer Richtung belasten. Die dadurch bedingte seitliche Auswanderung des Rollenpaars führt durch das zwangläufige System Zahnstange/Ritzelsegment zu einer Abwälzbewegung des Rollenpaares mit "wanderndem" Momentanpol; und zwar in dem Sinne, daß der Rollenanstellwinkel dem Radlenkwinkel bzw. dem Vorspurwinkel angepaßt wird. Dadurch wird ein sich selbst stabilisierendes System geschaffen.

Nun wird in an sich bekannter Weise die Radmitte, die Karosserieposition, der Sturz und die Vorspur bestimmt, wozu ein sogenannter Meßschlitten an das Fahrzeug herangefahren wird, welcher Abtastmeßinstrumente trägt. Entsprechend der ermittelten Meßwerte erfolgt nunmehr ein Einstellen des Fahrwerks auf entsprechende Sollwerte.

Zur Vermeidung restlicher Fahrwerksverspannungen und in Sonderfällen zur Ermittlung des Radausschlags bei Lenkungsbetätigung - eigens zu dieser Messung ist die Zahnstange 4 nämlich in ihrer Längsrichtung verschiebbar gelagert - werden jetzt die Arretierungszylinder 10 und 11 an allen Laufrollenpaaren gelöst. Dies kann z. B. bei Vierradlenkungen von Bedeutung sein. Durch die mit dem Aufnehmer 14 verbundenen Winkelmeßvorrichtungen werden die Radauslenkungen, d. h. die Rahmenbewegungen, registriert. Danach werden die Arretierungszylinder druckbeaufschlagt, eventuell nötige Einstellarbeiten ausgeführt und das Fahrzeug fährt bei gebremsten Rollen und bei Arretierung sämtlicher Arretierzylinder 10, 11, 12, 13, 23 vom Prüfstand.

Die beschriebene Funktion und das beschriebene Prüfverfahren trifft auch auf die weiteren Ausführungsformen zu, so daß im folgenden nur noch auf die Unterschiede gegenüber dem Ausführungsbeispiel gemäß Fig. 1 eingegangen wird. Für einander entsprechende Teile werden im folgenden die gleichen Bezugszeichen gewählt, die bei der Beschreibung von Fig. 1 benutzt wurden.

Fig. 2 zeigt einen Ausschnitt einer Rollenpaareinheit, welche im wesentlichen der in Fig. 1 dargestellten Ausführung entspricht. Lediglich das zwangläufige System Scheibe 6 und Gegenlager ist in diesem Falle durch einen Bandtrieb realisiert. Hierzu ist statt der Zahnstange 4 eine Leiste 18 vorgesehen, an welcher ein erstes Band 19 und ein zweites Band 20 befestigt sind. Die Scheibe 6 ist unverzahnt und liegt an der Leiste 18 bzw. an den Bändern 19, 20 an. Das erste Band 19 umschlingt die Scheibe 6 teilweise und ist mit seinem Endabschnitt 21 fest mit der Scheibe 6 verbunden. Entsprechendes gilt für das zweite Band 20, welches im Bereich seines Endabschnittes 22 an der Scheibe 6 befestigt ist. Auch durch diese Verbindung zwischen Scheibe 6 und Leiste 18 hat eine Verschiebung des Rollenpaares in Fahrzeugquerrichtung stets auch eine Drehung des Rollenpaares zur Folge.

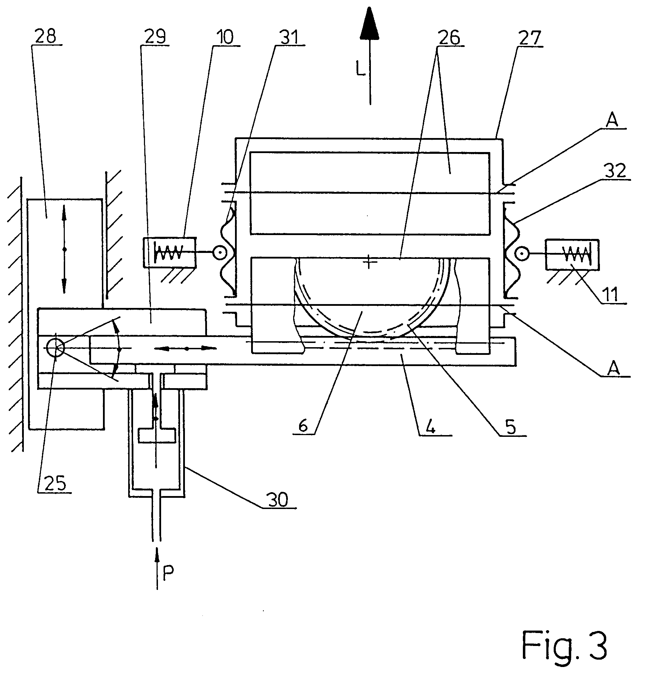

Im Ausführungsbeispiel gemäß Fig. 3 ist das Zwanglaufsystem Zahnstange 4/Scheibe 6 mit Ritzelsegment 5 um die vertikale Achse 25 schwenkbar gelagert. Auch in diesem Beispiel ist der die Rollen 26 tragende Rahmen 27 mit der Scheibe 6 fest verbunden.

Die vertikale Achse 25 ist an einem Führungsblock 28 vorgesehen, der in Fahrzeuglängsrichtung verschiebbar in einer Führungsschiene angeordnet ist. Diese Führungsschiene ist bei Bedarf zur Grundeinstellung des Prüfstandes in Fahrzeugquerrichtung einstellbar. Mittels der Achse 25 ist das Aufnahmeteil 29 schwenkbar gelagert, welches einen Schacht aufweist, in den ein Endabschnitt der Zahnstange hineinragt. Das Aufnahmeteil 29 ist als Klemmvorrichtung ausgebildet, weswegen ein quer zur Zahnstange verlaufender Stößel in den Führungsschacht hineinragt. Der Stößel ist mit dem Kolben der Arretierungszylindereinheit 30 verbunden, welche druckbeaufschlagt eine kraftschlüssige Verbindung zwischen der Zahnstange und dem Aufnahmeteil 29 herstellt. Die Arretierungszylindereinheit 30 entspricht in ihrer Funktion dem Arretierungszylinder 23 der Erfindungsausführung gemäß Fig. 1 und wird zur Durchführung der Lenkeinschlagsmessung bzw. zum Abbau restlicher Verspannungen während der Messung (von Sturz, Vorspur usw.) gelöst.

Zur Rückführung des Rollenrahmens 27 in seine Ausgangslage und zu seiner Blockierung sind die Arretierzylindereinheiten 10 und 11 eingesetzt. Sie sind mit Rollen versehen, welche in Gegenstükke 31 und 32 eingreifen. Die Arretierzylindereinheiten 10 und 11 entsprechen somit den Arretierzylindereinheiten 10, 11, 12, 13 der Erfindungsausführung nach Fig. 1 in ihrer Gesamtfunktion.

**Patentansprüche**

1. Fahrzeugprüfstand, insbesondere zum Vermessen der Radachsgeometrie, mit mindestens einem in einem Rahmen (27) gelagerten, ein Fahrzeugrad aufnehmenden Rollenpaar (26), dessen Rollenlängsachsen (A) im wesentlichen horizontal verlaufen, wobei der Rahmen (27) zum Ausgleich von Fahrwerksverspannungen in einer im wesentlichen horizontalen Ebene verschiebbar und drehbar gelagert ist, dadurch gekennzeichnet, daß der Momentanpol der Rahmenbewegung gegenüber einer festen Ebene in Richtung der Ausgleichsbewegung des Rades quer zum Fahrzeug verschiebbar ist.

2. Fahrzeugprüfstand nach Anspruch 1, dadurch gekennzeichnet, daß die Verschiebung des Momentanpols und der Ausgleichsweg des Rades etwa gleichgroß sind.

3. Fahrzeugprüfstand nach einem der vorhergehenden Ansprüche, dadurch gekennzeichnet, daß der Rahmen (27) einen gekrümmten Abwälzbereich (6, 5) aufweist, mittels dessen er sich im Zwanglauf auf einer Führungsfläche (4, 18) abwälzt.

4. Fahrzeugprüfstand nach Anspruch 3, dadurch gekennzeichnet, daß die Führungsfläche (4, 18) schwenkbar gelagert ist.

5. Fahrzeugprüfstand nach Anspruch 3 oder 4, dadurch gekennzeichnet, daß die Führungsfläche (4) und der Abwälzbereich (6, 5) über eine Verzahnung miteinander in Verbindung stehen.

6. Fahrzeugprüfstand nach Anspruch 3 oder 4, dadurch gekennzeichnet, daß der Abwälzbereich (6) über einen ihn zumindest teilweise umschlingenden Bandtrieb (19, 20) mit der Führungsfläche (18) in Verbindung steht.

7. Fahrzeugprüfstand nach Anspruch 5, dadurch gekennzeichnet, daß die Führungsfläche als Zahnstange (4) ausgeführt ist.

8. Fahrzeugprüfstand nach Anspruch 7, dadurch gekennzeichnet, daß die Zahnstange (4) entlang ihrer Längsachse verschiebbar gelagert ist.

9. Fahrzeugprüfstand nach Anspruch 8, dadurch gekennzeichnet, daß eine Haltevorrichtung (10, 11, 30) vorgesehen ist, durch welche die Längsverschiebbarkeit der Zahnstange (4) unterbindbar ist.

10. Fahrzeugprüfstand nach Anspruch 6, dadurch gekennzeichnet, daß die Führungsfläche als plane Ebene ausgeführt ist.

11. Fahrzeugprüfstand nach einem der vorhergehenden Ansprüche, dadurch gekennzeichnet, daß die Rollen (26) antreibbar sind.

12. Fahrzeugprüfstand nach einem der vorhergehenden Ansprüche, dadurch gekennzeichnet, daß der Abwälzbereich (5, 6) kreisförmig ausgebildet ist.

13. Fahrzeugprüfstand nach einem der vorhergehenden Ansprüche, dadurch gekennzeichnet, daß die Führungsfläche (4, 18) in Längsrichtung des Fahrzeuges begrenzt verschiebbar ist.

14. Fahrzeugprüfstand nach einem der vorhergehenden Ansprüche, dadurch gekennzeichnet, daß der Rahmen (27) einschließlich seiner Lagerung auf einem längs- und/ oder quereinstellbaren Zwischenteil (1, 28) angeordnet ist.

Fig.1

Fig.2

Fig. 3

EUROPÄISCHER RECHERCHENBERICHT

Europäisches Patentamt

Nummer der Anmeldung

EP 91 10 4108

## EINSCHLÄGIGE DOKUMENTE

| Kategorie | Kennzeichnung des Dokuments mit Angabe, soweit erforderlich, der maßgehlichen Teile | Betrifft Anspruch | KLASSIFIKATION DER ANMELDUNG (Int. Cl.5 ) |
|---|---|---|---|
| A | FR-A-2 263 500 (PLAS)<br>* Seite 2, Zeile 35 - Seite 8; Abbildungen *<br>--- | 1 | G01B5/255 |
| A | EP-A-0 199 913 (WEGMANN & CO. GMBH)<br>* das ganze Dokument *<br>--- | 1 | |
| A | EP-A-0 011 492 (REPCO LIMITED)<br>* Zusammenfassung; Abbildungen *<br>--- | 1 | |
| A | GB-A-2 179 460 (HONDA GIKEN KOGYO KABUSHIKI KAISHA)<br>* Seite 10, Zeile 109 - Seite 12, Zeile 23; Abbildungen 21-23 *<br>--- | 1 | |
| A | US-A-3 453 740 (SAKAMOTO)<br>* Spalte 5, Zeile 51 - Zeile 71; Abbildungen 14,15 *<br>--- | 1 | |
| A | US-A-2 025 051 (HAUCKE)<br>* Abbildung 1 * | 1 | |
| | ----- | | **RECHERCHIERTE SACHGEBIETE (Int. Cl.5 )**<br><br>G01B |

Der vorliegende Recherchenbericht wurde für alle Patentansprüche erstellt

| Recherchenort | Abschlußdatum der Recherche | Prüfer |
|---|---|---|
| DEN HAAG | 15 NOVEMBER 1991 | ALEX BATTESON |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes Dokument

EPO FORM 1503 03.82 (P0403)